# EUROPEAN PATENT APPLICATION

(11) **EP 1 459 799 A1**
(43) Date of publication of application: **22.09.2004**
(21) Application number: 02806061.4
(22) Date of filing: 05.12.2002
(51) Int. Cl.: B01D 53/72, B01D 53/047

(54) **METHOD FOR TREATING EXHAUST GAS CONTAINING VOLATILE HYDROCARBON, AND APPARATUS FOR PRACTICING SAID METHOD**

(30) Priority: 28.12.2001 JP 2001401674; 21.05.2002 JP 2002145788; 23.10.2002 JP 2002308497
(71) Applicant: System Eng Service Co., Ltd., Ichikawa-shi, Chiba 272-0127 (JP); Tsuru, Yoshiko, Higashimurayama-shi, Tokyo 189-0012 (JP)
(72) Inventor: TAHARA, Hiroshi, Kawasaki-shi, Kanagawa 216-0006 (JP); NOCHI, Hiroshi, Ichikawa-shi, Chiba 272-0127 (JP)
(74) Representative: Appelt, Christian W.
(86) International application number: PCT/JP2002/012746
(87) International publication number: WO 2003/057349

(57) **Abstract**

The present invention features a method employing the processes of adsorption and desorption for the treatment of exhaust gas containing volatile hydrocarbons, in which either a single layer of MPC pre-coated with volatile hydrocarbons is employed, or multiple-layers of such MPC and similarly pre-coated hydrophobic silica gel and/or synthetic zeolite are used as absorbent layers, and using a vacuum pump combined with purge gas for desorption, the adsorption-desorption switch-over time being set from 1 to 30 minutes, and the resulting purged exhaust gas is extracted to the outside of the system. Owing to such features, the present invention is capable of yielding clean gas substantially containing no volatile hydrocarbons when released into the atmosphere.

In addition, the present invention permits isolation and recovery of the targeted useful constituent in the case where the exhaust gas containing volatile hydrocarbons to be treated contains multi-constituent hydrocarbons with useful constituents, as well as the isolation and recovery of inert gas with a high level of purity for efficient reutilization in the case of inert gas containing gaseous impurities and/or contaminants.

Further, the employment of MPC pre-coated with volatile hydrocarbons as adsorbent presents another advantage, because within a normal range of humidity, such MPC does not selectively adsorb moisture, and instead adsorbs extremely low boiling point volatile hydrocarbons such as methane, ethylene and propylene at an outstanding performance level unparalleled by any other solid adsorbent.

## Description

### FIELD OF THE INVENTION

The present invention relates to a method for treating exhaust gas containing volatile hydrocarbons, and an apparatus for implementing the method.

More specifically, the present invention relates to a method of treating exhaust gas containing volatile hydrocarbons, whereby the volatile hydrocarbons are separated from the exhaust gas by means of the adsorption-desorption method, and thereafter the resulting gas is extracted from the outlet of an adsorption column and released into the atmosphere as clean gas, and to an apparatus for implementing the said method.

The present invention likewise relates to (1) a treatment method to be applied in the case where the exhaust gas containing volatile hydrocarbons is multi-constituent hydrocarbon gas containing a useful constituent targeted for recovery, with the purpose of separating (isolating) and recovering only the targeted useful constituent from the exhaust gas, and to an apparatus for implementing the said method; and (2) a treatment method to be applied in the case where the exhaust gas containing volatile hydrocarbons is an inert gas containing volatile hydrocarbon gaseous impurities and/or gaseous contaminants, whereby the volatile hydrocarbons are separated from the gas by means of the adsorption-desorption method and the resulting clean inert gas is recovered from the outlet of an adsorption column, and to an apparatus for implementing the said method.

### BACKGROUND OF THE INVENTION

As previously mentioned, the present invention relates to a method for treating exhaust gas containing volatile hydrocarbons, whereby the volatile hydrocarbons are separated from the exhaust gas by means of the adsorption-desorption method, and thereafter the resulting gas is extracted from the outlet of an adsorption column and released into the atmosphere as clean gas, and to an apparatus for implementing the said method.

For some time, almost all of the means for removing volatile hydrocarbons from exhaust gas through adsorption in order to satisfy legal restrictions on emission concentration levels have been disclosed (for examples, refer to Japanese Laid-Open Patent Publications No. 1997-47635, No. 1997-57060, No. 1997-215908, No. 1999-71584, and No. 1999-77495).

The methods disclosed in the aforementioned laid-open patents employ four types of adsorbent, namely, granular activated carbon, fibrous activated carbon, hydrophobic silica gel, and synthetic zeolite. Of these, the activated carbon adsorbent is the most widely used, having excellent adsorption performance, but poor desorption capability, so that heat desorption employing steam is used in nearly all cases. Recently, new forms of activated carbon that permit absorption and desorption have been developed, using only a purge gas, or a vacuum means. Activated carbon of this kind is produced in China from lignite or peat, while a variety of activated carbons, obtained by activating olive seeds by means of treatment with phosphoric acid, have been commercially marketed in the Netherlands. Such products have pores which are about one nanometer in size, and referred to as "nanopore carbon".

The present invention relates to a method for treating exhaust gas containing volatile hydrocarbons, using a new absorption-desorption method that employs, either alone or in combination with commonly used hydrophobic silica gel or synthetic zeolite, an activated carbon that does not require steam for absorption/desorption, and to an apparatus for implementing the said method.

More specifically, it relates to a method and apparatus, whereby volatile hydrocarbons such as ethylene, propylene, benzene, toluene, methyl ethyl ketone, trichloroethylene, octadiene and hexane contained in exhaust gas are treated by adsorption in such a manner that the resulting exhaust gas preferably contains a concentration of not more than 10 ppm of such hydrocarbons when it is released.

Furthermore, as mentioned above, the present invention likewise relates to (1) a treatment method to be applied in the case where the exhaust gas containing volatile hydrocarbons is multi-constituent hydrocarbon gas containing a useful constituent targeted for recovery with the purpose of separating (isolating) and recovering only the targeted useful constituent from the exhaust gas, and to an apparatus for implementing the said method; and (2) a treatment method to be applied where the exhaust gas containing volatile hydrocarbons is an inert gas containing volatile hydrocarbon gaseous impurities and/or gaseous contaminants, whereby the volatile hydrocarbons are separated from the inert gas containing volatile hydrocarbon gaseous impurities and/or gaseous contaminants by means of the adsorption-desorption method and the resulting clean inert gas is recovered from the outlet of an adsorption column, and to an apparatus for implementing the said method.

Following is a description of the abovementioned treatment method (1) which is a specific method for the treatment of exhaust gas during production of synthetic rubber and an apparatus for implementing the said method (1).

As is publicly known, the production of synthetic rubber involves the polymerization of various olefinic hydrocarbons such as ethylene, propylene and butadiene as raw material gas, either singly or combined, to obtain products such as butyl rubber, butadiene rubber or ethylene-propylene rubber. The exhaust gas produced by the polymerizing reactions taking place during such production contains both discardable gases (by-product gases) and gases that ought to be recovered (non-reacting gases). For example, certain types of polymerizing reactions give rise to both ethylene and butane in the exhaust gas. In such case it is desirable to recover and re-utilize the non-reacting ethylene gas and to discard the by-product butane gas. In addition, the non-reacting ethylene recovered must have a purity of 99.9 % or higher in order to be reusable.

However, conventional technology does not provide for techniques to separate and recover such substances in the gaseous phase, that is, without liquefying them, and are currently disposed of by incineration.

The present invention likewise relates to an exhaust gas treatment method whereby only the useful constituent with a high level of purity such as the above-mentioned non-reacting ethylene, is separated (isolated) and recovered from multi-constituent hydrocarbon gas containing such constituent, and to an apparatus for implementing the said method.

The abovementioned method (2) for the treatment of exhaust gas and apparatus for implementing the same will hereafter be described in detail. This method relates to the purification treatment of an inert gas (for example, nitrogen), containing volatile gaseous impurities and/or gaseous contaminants (e.g., ethylene, propylene, benzene, toluene, methyl ethyl ketone, trichloroethylene, octadiene and hexane, having originated as volatile reactants, non-reacting materials, reaction products or the like), which have mixed with the inert gas as a result of reactions requiring the presence of inert gas. This method also relates to the reduction of the concentration of such gaseous impurities and/or gaseous contaminants in the inert gas when cleaning products with inert gas, to not more than 100 ppm, or preferably to not more than 10 ppm - in other words, to raise the purity of the inert gas preferably to a level of 99 % or higher, so that it can be re-utilized. "Inert gas" is used as a general term referring to chemical substances that have a significantly low level of activity of their own, e.g., nitrogen, carbon dioxide, helium, xenon or chlorofluorocarbon gases.

### BACKGROUND OF THE INVENTION

There are purportedly as many as 20,000 chemical products in use in Japan today, most of which are produced at chemical, petrochemical, pharmaceutical and similar plants. The gases that are derived from such production processes and released directly to the atmosphere contain various volatile hydrocarbons such as those earlier mentioned. In addition, the end products of such processes become mixed with the air and released into the atmosphere during storage, transportation, loading and unloading.

Further, the raw materials for many of these chemical products are basic chemical substances - basic organic chemicals - such as aromatics, aliphatics, heterocyclics and organic halogens, which react under the influence of catalysts to yield desired products. Such reactions often ensue in the presence of an inert gas such as nitrogen, carbon dioxide, carbon monoxide or helium, whereby the inert gas left over from the reaction is contaminated with reaction products and is usually discarded because it cannot be re-utilized.

Similarly, most of the etchants (for example, ruthenium dioctadiene) used for etching in semiconductor plants contain gaseous constituents that pose a disposal problem. To recover targeted constituents with a high level of purity, some petrochemical plants attempt to separate undesirable gaseous impurities from the reaction gases produced during the production process.

Incidentally, the release of untreated exhaust gas (which includes and shall hereafter include "contaminated inert gas";) contaminated with volatile hydrocarbons into the atmosphere constitutes a violation of legal regulations on emission concentrations, because it contains benzene, toluene, methylene chloride, methyl ethyl ketone, trichloroethylene, chlorofluorocarbon and other harmful gaseous impurities and contaminants that are prime culprits in polluting the atmosphere. The disposal of exhaust gas therefore remains a major concern for all manufacturing concerns.

The traditional methods of treating such exhaust gas containing gaseous impurities and/or contaminants consist in washing it first with water or acid/alkali, then with sponge oil of high boiling-point (for example, heavy oil), or using a conventional type of activated carbon to adsorb the gaseous impurities, with the activated carbon being removed and disposed of as industrial waste before breakthrough occurs.

Conventional types of activated carbon however, cannot be used for exhaust gas that contains polymeric gaseous contaminants such as dienes. Exhaust gas containing such contaminants is treated in a rather underhanded manner by diluting it with air until the emission concentration of its constituents reaches below the regulated tolerable level as prescribed under the local ordinance, and it is then released into the atmosphere in such state.

However, as for washing with water, acid or alkali, or heavy oil, and for regeneration of conventional types of activated carbon by means of steam, wastewater treatment equipment is indispensable.

Activated sludge may be used for such treatment, but even then, a copious amount of aeration is required because the sludge does not lower the level of COD, although it reduces BOD to a level conforming to wastewater standards. And in the course of such aeration, the above-mentioned gaseous impurities and contaminants which have been released into and mixed with the wastewater, are then released into the atmosphere. The concentration of such impurities and contaminants depends on the amount of aeration, but is generally relatively low at 100 ppm or less. Because such concentrations meet the permissible emission concentration levels (250 ppm maximum for Tokyo), the use of such treatment method has not posed any problem.

However, the Law for PRTR (Pollutant Release and Transfer Register) and Promotion of Chemical Management (known and referred to as the "PRTR Law"), which took effect from April 2002, regulates the total volume of emissions from plants as a whole, as opposed to the regulation of emission concentrations, which had been commonly applied hitherto. This means that the above practice of diluting concentrations with large amounts of air through aeration prior to release is no longer permitted.

In view thereof, the inventors have devised the present invention, which treats exhaust gas containing volatile hydrocarbons by means of a new adsorbent, and removes alcohols, aromatics, paraffins, olefins and such other impurities present in the gas so as to achieve zero emissions in the interest of preventing pollution. The inventors have additionally devised a way of separating, recovering and re-utilizing useful constituents or inert gas from two particular varieties of exhaust gas containing volatile hydrocarbons, namely multi-constituent hydrocarbon gas containing a targeted useful constituent, and inert gas containing gaseous impurities and/or gaseous contaminants.

To achieve the above-mentioned purposes, great care is required in selecting the adsorbent, because it has to deal with multifarious volatile hydrocarbons contained in exhaust gas, including gasoline vapors, water-soluble alcohols and highly polymerizable olefin gases.

Incidentally, methods that have traditionally been employed to separate contaminants from exhaust gas for the above-mentioned purposes include cryogenic separation, distillation and absorption.

The publicly known adsorption-separation methods that have been widely employed in this field are: (1) gas separation membrane plus adsorption; and (2) adsorption using activated carbon, zeolite, hydrophobic silica gel or the like. Details of such methods can be found in, for example, the above-cited Japanese Laid-Open Patent Publication Nos. 1997-47635, 1997-57060, 1997-215908, 1999-71584, and No. 1999-77495, as well as Japanese Laid-Open Patent Publication Nos. 1982-14687, No. 1982-42319, No. 1984-50715 and No. 1984-50716.

These adsorption methods include the commonly used technique of switching between adsorption and desorption. Though it is not a particularly novel observation, one may note that when the exhaust gas contains pollutants ranging widely from those with extremely low boiling point such as methane and ethane, to those with relatively high boiling point such as pentane and hexane, this switching technique is not very effective in dealing with such pollutants through the use of a single adsorbent that is subject to functional constraints. One such example is conventional activated carbon, whose use is legally prohibited in cases where the gaseous contaminants (pollutants) are dienes, olefins or the like, because the numerous active sites present inside such activated carbon readily trigger polymerization of such compounds, and the heat generated by such polymerization poses hazards of ignition and explosion.

### AIMS OF THE INVENTION

In consideration of the above-mentioned problems, the present invention aims, firstly, to provide a treatment method that separates volatile hydrocarbons from exhaust gas containing such hydrocarbons, and an apparatus for implementing the said method, whereby flame-resistant activated carbon having pores that are primarily mesopores with a diameter of 20 to 40 angstroms (hereinafter referred to as "MPC") is used in a pre-coated state, either alone or in combination with similarly pre-coated hydrophobic silica gel and/or synthetic zeolite, to remove volatile hydrocarbons contained in exhaust gas, in order to achieve zero emissions (hereinafter referred to as the "First Purpose").

As indicated in the first purpose, the present invention employs an adsorption means that uses MPC in a pre-coated state, either alone or in combination with similarly pre-coated hydrophobic silica gel and/or synthetic zeolite in order to (1) efficiently isolate and recover a targeted useful constituent with a high level of purity from exhaust gas which is a multi-constituent hydrocarbon gas, so that such constituent can be re-utilized; and (2) efficiently isolate and recover inert gas with a high level of purity from exhaust gas, where the exhaust gas is inert gas containing gaseous impurities and/or gaseous contaminants, so that the inert gas can be re-utilized (hereinafter referred to as the "Second Purpose").

### DISCLOSURE OF THE INVENTION

In order to achieve the above-mentioned first and second purposes, the treatment method for separating volatile hydrocarbons (gaseous contaminants) from exhaust gas according to the present invention employs an adsorption apparatus capable of executing absorption and desorption alternately, having a single layer of MPC pre-coated with gaseous contaminants as the adsorbent, or multiple layers of such MPC in combination with a similarly pre-coated synthetic zeolite and/or hydrophobic silica gel, with the exhaust gas containing gaseous contaminants passing through the adsorbent layers so as to cause its pollutant constituents to be adsorbed, the result of such process being a clean gas that substantially has no pollutant constituents.

In other words, the method of treating exhaust gas containing volatile hydrocarbons according to the present invention consists in the employment of an adsorption apparatus having adsorbent layers which can execute adsorption and desorption alternately, and devised in such manner that while exhaust gas containing volatile hydrocarbons passes through one of the adsorption apparatuses, its volatile hydrocarbons are adsorbed into the adsorbent layers within the adsorption apparatus, resulting in exhaust gas substantially free of volatile hydrocarbons, and extracted from the outlet of the adsorption apparatus, and concurrently the other adsorption apparatus switches to desorption operation so as to extract the freshly-adsorbed volatile hydrocarbons for release to the outside of the system.

Each of the adsorbent layers of the adsorption apparatus has either a single layer of MPC pre-coated with volatile hydrocarbons, or multiple-layers of the MPC in combination with similarly pre-coated hydrophobic silica gel and/or synthetic zeolite, a vacuum pump and a purge gas used for desorption, the adsorption/desorption switchover time being 1 to 30 minutes, and the resulting purge exhaust gas is extracted for release to the outside of the system, and by means of which, the adsorption apparatus is able to achieve the above-mentioned first and second purposes.

Note that the term "mesopore activated carbon (MPC)" used herein refers to flame-resistant activated carbon having pores that are primarily mesopores with the diameter of a nanometer.

Moreover, the term "exhaust gas containing volatile hydrocarbons" as used in the present invention includes such cases where the exhaust gas is a multi-constituent hydrocarbon gas containing a useful constituent targeted for recovery, or is an inert gas containing gaseous impurities and/or gaseous contaminants. The second purpose of the present invention is particularly achieved with respect to such kinds of exhaust gas.

The method of treating exhaust gas containing volatile hydrocarbons of the present invention (treatment method that separates volatile hydrocarbons from exhaust gas, so as to obtain a clean gas or to extract a targeted gaseous constituent or an inert gas) comprises subjecting the purged exhaust gas to cooling (condensation) treatment, and returning the uncondensed gas to the inlet of the adsorption apparatus, and thereafter subjecting the exhaust gas containing volatile hydrocarbons that is fed into the adsorption apparatus to an adsorption treatment after the pressurizing or pre-cooling treatment.

The apparatus for implementing the method of treating exhaust gas containing volatile hydrocarbons according to the present invention is constructed in such manner that the adsorbent layers inside the adsorption apparatus are separated into multiple independent layers of solid adsorbent piled one after the other, each with different adsorption characteristics. Exhaust gas conduit tubes are embedded in each of the spaces between the multiple independent solid adsorbent layers, such tubes being connected to the vacuum pump. The adsorbent layers in the adsorption apparatus are packed inside the spaces enclosed by multiple gas-permeable cylinders.

### BRIEF DESCRIPTION OF THE DRAWINGS

Fig. 1 is a flow diagram of a treatment method for exhaust gas containing hydrocarbons in the first embodiment of the present invention.
Fig. 2 is a flow diagram of a nitrogen gas recovery system in the second embodiment of the present invention.
Fig. 3 is a longitudinal cross-sectional view of an adsorption column in one example of the apparatus of the present invention.
Fig. 4 is a longitudinal cross-sectional view of an adsorption column in another example of the apparatus of the present invention.
Fig. 5 is a longitudinal cross-sectional view of an adsorption column in another example of the apparatus of the present invention.
Fig. 6 provides two drawings explicating the adsorption column in Fig. 5, where Fig. 6(A) is a cross-sectional view on the line A - A in Fig. 5 and Fig. 6(B) is an enlarged view showing a part of Fig. 5 in greater detail.
Fig. 7 is a graph showing the breakthrough curves for GF-40 mesopore activated carbon.

### PREFERRED EMBODIMENTS

The preferred embodiments of the present invention will be described hereafter. A more detailed explanation of the present invention immediately follows.

The innumerable pores of activated carbon used in conventional adsorption methods are micropores. The volatile hydrocarbons in the exhaust gas penetrate into the deepest recesses of these micropores where they become diffused and, because of strong van der Waals forces, form robust C - C bond with the carbon of the pores' walls. However, the strong affinity between these substances has a drawback, in that their bonding also gives rise to what is known as "capillary condensation", generating an enormous adsorption heat that is far greater than condensation heat. This type of activated carbon therefore poses fire hazards although it can be easily used.

Moreover, it is well known that when the volatile hydrocarbons are in capillary condensation, a heating means such as steam is required to cause the volatile hydrocarbons to separate from the micropores, as they cannot be desorbed by the simple means of a vacuum pump or purging. Further, as mentioned earlier, if the volatile hydrocarbons (gaseous contaminants, pollutants) in the exhaust gas are dienes, olefins or the like, polymerization of such constituents is likely to be triggered by the numerous active sites present inside the activated carbon, and the heat generated by such polymerization poses ignition and explosion hazards.

The present inventors have discovered that it is possible to avoid the above-described hazards that are liable to accompany the adsorption of volatile hydrocarbons, by utilizing a flame-resistant activated carbon having pores that are primarily mesopores with the diameter of a nanometer ("MPC"), or utilizing such MPC in combination with a publicly-known flame-resistant solid adsorbent, specifically, synthetic zeolite and/or hydrophobic silica gel and at the same time blocking the active sites present inside the pores of such adsorbents by means of pre-coating, instead of the activated carbon described above that has long been commonly employed for such purposes.

The pores of adsorbents generally consist of three types: micropores, mesopores and macropores. The average diameter of these types is 3 to 10 angstrom for micropores, 20 to 60 angstrom for mesopores, and 60 to 100 angstrom for macropores. These differences in pore size result in varying mechanisms of adsorption of volatile hydrocarbons, moisture, or the like.

Specifically, adsorption to micropores takes the form of surface diffusion, while adsorption to mesopores takes the form of pore diffusion. Macropores are gas passage holes for entry or exit of molecules, with no relevance to the mechanism of their adsorption. For example, the surface area of micropores in ordinary activated carbon for example, is as high as 1,000 to 2,000 m² per gram, whereas the surface area of mesopores in hydrophobic silica gel, which primarily contains mesopores, is 400 to 600 m² per gram.

Simply stated, the penetration of molecules into micropores and mesopores, more particularly micropores, entails the release of a huge amount of energy. This energy is the "adsorption heat", and is generally known to amount to about 1.5 times of the latent heat of evaporation. Such heat is generated by capillary condensation of the volatile hydrocarbons (HCs) inside the micropores. However, in the case of mesopores, experiments have shown that the temperature does not rise to hazardous levels because capillary condensation is not likely to occur in pores of this size, and as mentioned above, the interior surface area of pores is small. The absence of the hazardous rise in temperature implies that desorbing hydrocarbons from the mesopores solely by means of purge gas at normal temperature or suctioning with a vacuum pump is possible.

A detailed explanation of the reasons why pre-coating of adsorbents (pre-adsorption) is an extremely important adsorption/desorption method for achieving convenient and rapid desorption of hydrocarbons from inside the pores of MPC follows hereafter.

Namely, if the constituents to be adsorbed, i.e., hydrocarbons, are not present in advance inside the pores in the adsorbent granules, the rate of diffusion of the hydrocarbons into the pores of such "virgin" granules is not very high. Particularly in the case of pores with a surface area of 1,000 m²/g or more, the time of diffusion (penetration rate) of the hydrocarbons into the pores is several seconds or up to 10 seconds, depending on the concentration of hydrocarbons in the feed gas. The diffusion rate, naturally, also varies greatly with the type of adsorbent.

Essentially speaking, provided that pressure is at normal level, whether it is "surface diffusion" or "pore diffusion", the rate at which the hydrocarbons enters the pores, or the rate at which the hydrocarbons condense (liquefy) inside the capillaries is a function of temperature and the duration of contact, and the hydrocarbons do not quickly penetrate deeply into of the pores. As the flowing gas repeatedly comes into contact with the adsorbent, it expels the air occupying the pores, and gradually penetrates into the pores. If the activated carbon used has pores that are predominantly micropores, heating is necessary in order to desorb hydrocarbons that have been adsorbed in such a manner. Usually steam is employed to flush out all of the hydrocarbons, and the adhering moisture is dried away to leave the pores empty for the next adsorption process. Thus, considerable time is required for the adsorption-desorption operation.

In more explicit terms, the hydrocarbons in the inlet gas possess considerable speed, and are likely to pass over the adsorbent's surfaces and exit through the adsorption column's outlet before they have a chance to enter the pores. Thus, if the pre-coating is not conducted in accordance with a predetermined procedure, the concentration of hydrocarbons in the outlet gas would be at the extraordinarily high level of 1,200 ppm as compared to the 5,000 ppm concentration of hydrocarbons (methyl alcohol) in the inlet gas, as shown by the results of experiments conducted by the present inventors using hydrophobic silica gel as adsorbent. Such high level of concentration of hydrocarbons would lead to the loss of balance between the rising speed of the hydrocarbons contained in the inlet gas and the adsorption speed of the hydrocarbons entering the adsorbent's pores. In such event, the hydrocarbons must undergo capillary condensation in order to be adsorbed. In other words, if the inside portion of the pores is pre-coated with hydrocarbons prior to adsorption, neither will moisture ensue nor the hydrocarbons in the exhaust gas undergo capillary condensation inside the pores.

From the standpoint of researchers engaged in long-running attempts to increase the rate of penetration of hydrocarbons into empty pores, there are only two alternatives: to increase the concentration of hydrocarbons in the exhaust gas, or to decrease the rising speed - that is, to prolong the duration of contact or to apply pressure. Otherwise, an adsorbent offering more micropores for reception of the hydrocarbons, that is, having as large a per-gram adsorption area as possible, must be used.

The present inventors have long conducted research not putting emphasis on such ways to increase the rate of penetration into (diffusion in) the pore interiors, but rather on the affinity between hydrocarbons pre-coated onto the adsorbent's surfaces and the hydrocarbons in the exhaust gas, which rise through the adsorption column. The reason for doing so lies in the shortcomings of common practice in this area. Specifically, activated carbon containing micropores cannot be used to treat exhaust gas containing hydrocarbons at emission concentrations of 1% under legal regulations. Likewise, the customary use of steam in the desorption process results in a situation in which all of the carbon lodged inside the micropores have to be extracted for release to the outside of the system, and thereafter, the pores must revert to an empty, moisture-free state prior to the resumption of adsorption, consequently requiring a long adsorption/desorption "swing" (switchover) time of 1 to 6 hours.

To solve the abovementioned problems, a pre-coating means, which the present inventors have long advocated, may be tried. However, pre-coating the activated carbon primarily containing micropores is an extremely hazardous operation for treatment of exhaust gas containing high concentrations of hydrocarbons. In view of accidents that have occurred in the past, a few commercial plants carry out such pre-coating very slowly for 12 hours or over in a current of nitrogen, which is rare. Accordingly, to avoid capillary condensation and its associated adsorption heat hazards, the present inventors have chosen not to adhere to the widely advocated "equilibrium model" or "frozen model", and opted instead to use other concepts to address the issues in the "surface diffusion /pore diffusion" adsorption dimension. These concepts are (1) the dissolution phenomenon between hydrocarbons (condensate) pre-filled inside the pores and hydrocarbons in the exhaust gas rising through the adsorption column in the case of adsorption,; and (2) the evaporation of hydrocarbons from the condensate, filled in the adsorbent pores in the case of desorption. Essentially, these concepts embody the "pre-coating model" proposed by the present inventors, whereby desorption of surface-diffused hydrocarbons predominantly occurs by means of purging, while desorption of pore-diffused hydrocarbons predominantly takes place by means of vacuum.

Under the "pre-coating model," it is assumed that the phenomena of diffusion and evaporation predominate as prime mechanisms in mass transfer within the pores, rather than surface diffusion and pore diffusion. Therefore, it is not the overall volumetric mass transfer coefficient (Kfav) that should be considered as the physical value (factor) governing the rate of adsorption, but the mass transfer coefficient (diffusion coefficient) of the individual hydrocarbons molecules transferring via the surfaces of the individual adsorbent granules. And because each of the hydrocarbons - benzene, pentane and so forth - has its own such coefficient value, this model necessitates the construction of a database of such values.

In contrast to the publicly known "equilibrium" and "frozen" models, the hydrocarbons that are pre-coated onto the adsorbent in the manner described above in the "pre-coating model" must be preserved onto the adsorbent granules to the fullest extent possible. The coating must remain and not be chipped away or peeled off unnecessarily. Therefore, putting in too much purge gas or applying too strong a vacuum must be avoided. Ideally, desorption may employ vacuum and purging means that remove only an amount of hydrocarbons that is commensurate with the amount of exhaust gas hydrocarbons that have dissolved into the pre-coating hydrocarbons (condensate).

In actuality, however, the volume of hydrocarbons that is pre-coated into the adsorbent layers cannot be controlled to a specific desired amount. The reason for replacing uncondensed gas hydrocarbons from the purge exhaust into the feed gas is to restore the pores to their original depth, as they are peeled away by purging and vacuuming, and to restore the coating of the hydrocarbons deposited in the pores to its original thickness.

An alternative method to the above is what is known as the "returned-flow concentration operation (replacement purge), by using some of the high-concentration hydrocarbons contained in the purge exhaust gas utilized in the desorption process as purge gas to flush out air and moisture from the inside of the adsorption-desorption column and replace them with hydrocarbons. In case the hydrocarbons in the exhaust gas are composed of water-soluble alcohols, this replacement purge method would be an effective means of having the adsorbent selectively adsorb alcohols only.

On the other hand, if desorption takes place to an excessive degree, as previously mentioned, the emptied portions would have no hydrocarbons in them. This means that at such empty portions there is no affinity - that is, no dissolving forces - to attract the rising hydrocarbons in the exhaust gas into the pores as they pass through the pores. As a result, adsorption depends almost exclusively on the rate of diffusion of the hydrocarbons molecules into the inside of pores, such that if the speed of the rising gas is high, the hydrocarbon molecules in the feed gas simply pass over the surface of the adsorbent granules and exit through the adsorption column's outlet. A comparison made between the "5 minute - 5 minute" swing and the "15 minute - 15 minute" swing, both experimentally and using real apparatus, clearly shows that the latter (15 minute - 15 minute swing) is worse. Naturally, if the speed of the rising gas is made extremely slow, it would not be impossible to induce penetration into the pores by matching the rate of diffusion into the pores with contact duration. Actually, however, the apparatus is optimally designed to be manufactured in accordance with a predetermined material balance, and does not allow any major alteration of the operating conditions stipulated in the manuals, though marginal cases may occur.

Essentially speaking, as long the pores used in the adsorbent granules after pre-filling the pores of the adsorbent with hydrocarbons are of mesopore size, the "5 minute - 5 minute" swing would represent the duration limit, permitting reception of hydrocarbons of maximum volume into the pores. At the very most, such limit is around 10 minutes.

To summarize, the present invention rests on the following three theoretical pillars:
(1) Pre-coating of the adsorbent (pre-absorption)
(2) Return of uncondensed gas
(3) Quick swing between adsorption and desorption

These pillars have been proposed by the present inventors in Japanese Laid-Open Patent Publication Nos. 1997-47635 and No. 1999-71584 cited earlier. However, these laid-open patents have not disclosed the treatment method and apparatus utilizing MPC that characterize the present invention.

As explained above, the phenomenon of mass transfer of hydrocarbons through the pores in the surface of the adsorbent granules can be summarized in the form of a simple model of the processes of condensation and evaporation of the hydrocarbon molecules.

As for the present invention, the processes of adsorption and desorption rely solely on the mass transfer between the hydrocarbons (condensate) filled inside the adsorbent's mesopores, and the hydrocarbons (gas) in the exhaust gas, naturally limiting the capacity of the pores to receive hydrocarbons, thereby reducing the adsorption/desorption swing time. Generally speaking, the shorter the adsorption/desorption swing time, the better. However, because of the limited service life of the solenoid valves, a lower limit of the adsorption/desorption swing time i.e., around one (1) minute is preferable. As for the upper limit, because longer swing time requires huge amounts of adsorbent, the present inventors have set a value of around 30 minutes for economic reasons.

### EMBODIMENT OF THE PRESENT INVETION

The preferred embodiment of the present invention will be described hereafter.

In the adsorption/desorption switchover, it is highly preferable that the exhaust gas containing volatile hydrocarbons fed into the adsorption apparatus is maintained in a pressurized state during the adsorption process. It is likewise preferable to cool the exhaust gas, because this has the effect of condensing the moisture contained therein.

During desorption, it is preferable to heat the purge gas. In addition, it is preferable that air and/or nitrogen be used as purge gas and that some of the purge exhaust gas be re-used as purge gas. Further, it is preferable to dehumidify the purge gas (air and/or nitrogen) for use in the desorption process. The advantage of dehumidifying the purge gas lies in the fact that under normal pressure, the expansion of moisture in the purge gas in some cases poses a problem. For example, if the vacuum pump is run at 25 Torr, the moisture expands by a factor of about 30, rendering the pump unable to maintain the predetermined 25 Torr. Therefore, eliminating the moisture yields two benefits: (a) the reduction of load on the vacuum pump, which is used for regeneration; and (b) the prevention of capillary condensation of moisture penetrating inside the adsorbent layers during desorption.

Re-using some of the high-concentration volatile hydrocarbons in the purge exhaust gas as purge gas has the effect of flushing out capillary-condensed moisture and air, and replacing them with a pre-coating of hydrocarbons. This is what is publicly known as the "replacement purging" or "returned-flow concentration" technique. The use of the replacement purging technique in combination with MPC according to the present invention provides highly superior effects.

The preferred embodiment of the present invention also preferably includes replacing the gas, which remains uncondensed when the purge exhaust gas is cooled, to the inlet of the adsorption apparatus, or returning it directly to the adsorbent layers.

More precisely, in the case where the concentration of the uncondensed gas is lower than that of the inlet gas, returning such gas into the inlet may undesirably reduce the concentration of the inlet gas. Therefore, the uncondensed gas is instead separately fed into the adsorption column through the bottom thereof, while the inlet gas of higher concentration is fed into the adsorbent layers through the middle portion of the adsorption column. In the reverse case, where the concentration of the uncondensed gas is higher than that of the inlet gas, the former may be mixed with the inlet gas, or, more preferably, it is returned directly to the middle portion of the adsorbent layers. The result is a dramatically higher concentration of hydrocarbons in the purge exhaust gas. This technique is particularly effective for hydrocarbons and chlorofluorocarbons, which have very high volatility at low temperature (for example, 0°C or below). Normally, when adsorption is carried out at normal pressure and desorption is carried out at 25 mmHg of reduced pressure, the concentration does not increase by more than a factor of 30 or so.

Furthermore, according to the preferred embodiment of the present invention, the adsorption process of the exhaust gas containing volatile hydrocarbons to be fed into the adsorption apparatus preferably takes place after it has undergone treatment with absorbent liquid or cleaning liquid, or pressurizing. It is publicly-known that in the adsorption process, adsorptive layers packed with solid adsorbent are used, and desorption is performed by means of a purge gas in combination with suctioning by a vacuum pump. However, the present inventors have exercised special care in the selection of the solid adsorbent, employing an MPC that permits vacuum desorption, so that in one embodiment, the adsorbent layers of the adsorption apparatus: (a) comprise multiple independent layers of adsorbents with varying adsorption characteristics placed one after another (preferably, exhaust gas conduit tubes are embedded in the spaces between the adsorbent layers so as to be connected to the vacuum pump), and (b) are packed with adsorbents of the adsorption apparatus in spaces that are enclosed by multiple gas-permeable cylinders, so as to make the exhaust gas flow in a radial flow pattern, and by means of which, the apparatus can treat large volumes of gas in the order of several thousands or several tens of thousands of cubic meters per hour, which may be said to be an outstanding adsorption-desorption performance that cannot be achieved using conventional methods.

As for the adsorbent to be used, the present invention employs an activated carbon having pores that are primarily mesopores ("MPC"), packed into a single layer, or packed in combination with synthetic zeolite and/or hydrophobic silica gel in a multiple-layer arrangement. In either case, the adsorbent used is in a pre-coated state.

As for the pre-coatant, gas with constituents similar to the gaseous contaminants (volatile hydrocarbons) contained in the exhaust gas which is to be treated, is preferably used.

In another preferred embodiment of the present invention, where volatile hydrocarbons contained in the exhaust gas consist solely of gasoline vapor or solely of aromatics such as benzene and toluene, a single layer of MPC solid adsorbent is used. However, in the case where the hydrocarbons to be removed from the exhaust gas comprise gases with extremely low boiling points such as methane, ethylene and propylene, or gases with relatively high boiling points such as pentane, hexane and benzene, a multiple-layer of MPC and synthetic zeolite and/or hydrophobic silica gel, in which the layers are stacked one after another, is preferably used. It is therefore essential that selection of the appropriate adsorbents be made with the greatest care.

To give specific examples, if the volatile hydrocarbons contained in the exhaust gas consist solely of low boiling point compounds such as methane and ethylene, a single layer of MPC is employed. On the other hand, if they also contain high boiling point hydrocarbons or other low boiling point hydrocarbons alongside such compounds, MPC is employed together with high silica-content Y-type synthetic zeolite or high alumina-content synthetic zeolite (made and sold by Tosoh Corporation under the brand name "Zeolum"), and A-type hydrophobic silica gel and/or B-type hydrophobic silica gel. In the latter case, the MPC layer is placed at the top, while the synthetic zeolite ("Zeolum") forms the middle layer, and the A-type hydrophobic silica gel and/or B-type hydrophobic silica gel layer is placed at the bottom.

The reason for such arrangement is the experimentally proven fact that, if the diameter of the MPC's adsorbent pores is 20 to 40 angstrom, and that of the A-type hydrophobic silica gel's pores is 30 angstrom, while that of the B-type hydrophobic silica gel is 60 angstrom, when the exhaust gas contains hydrocarbons with low relative pressure such as methane, ethylene and propylene, the largest amounts of substance are absorbed by the MPC and the A-type hydrophobic silica gel (30 angstrom). On the other hand, hydrocarbons with high boiling points such as pentane, hexane and benzene are more readily adsorbed by (and desorbed from) the B-type hydrophobic silica gel (with an average pore diameter of 60 angstrom). Another basis for the said arrangement is that although they are hydrophilic, MPC and the synthetic zeolite ("Zeolum"), have the property of being able to selectively adsorb low-boiling point methane and ethylene in the absence of water.

The reason why MPC should preferably be placed at the upper most level is that, unlike ordinary activated carbon which gives rise to capillary condensation of moisture at relative humidity (RH) of 40% or so, MPC does not produce capillary condensation of up to RH of around 60%. This means that as long as the level of humidity remains within a normal range, MPC does not selectively adsorb moisture, and instead adsorbs volatile hydrocarbons with extremely low boiling points such as methane, ethylene and propylene at an outstanding level of performance not exhibited in other solid adsorbents.

The adsorption-desorption method of the present invention has following purposes: (1) to ensure that in the longstanding and widespread practice of releasing air-diluted gaseous hydrocarbons into the atmosphere, such hydrocarbons are below the regulation limits; (2a) to recover useful constituents with high level of purity from multi-constituent hydrocarbons gas containing such constituents; and (2b) to recover inert gas (nitrogen) with high level of purity from the contaminated gas (contaminated nitrogen containing volatile hydrocarbons) that is discarded during the production of polymers such as propylene. The separation process is one of the unit processes applied as a means for purifying contaminated gas, and is comparable to the distillation, absorption and other processes employed. The above-described isolation of a target constituent from multiple gaseous constituents contained in exhaust gas by means of an adsorption process and the isolation of inert gas from exhaust gas can be said to constitute new separation techniques without exaggeration.

Although it is true that the individual basic technique of treating volatile hydrocarbons in exhaust gas is already publicly-known, the novel use of MPC and of new methods such as combining MPC with the publicly-known hydrophobic silica gel and synthetic zeolite in multiple layers as proposed in the treatment method of the present invention constitutes a discovery that yields effects dramatically superior to those made by the methods of cryogenic separation, chemical cleaning, or treatment with absorbent liquid.

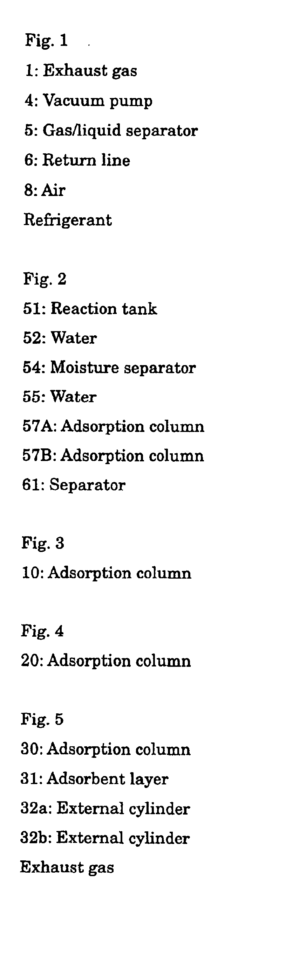

Following next is a description of the preferred embodiments of the present invention with reference to Figs. 3 to 6.

Fig. 3 is a longitudinal cross-sectional view of the adsorption column in one example of the apparatus of the present invention.

Fig. 4 provides views of the adsorption column in another example of the apparatus of the present invention. Fig. 4(A) is a cross-sectional view of the adsorption column, while Fig. 4(B) is an enlarged detail view of the portions labeled C in Fig. 4(A).

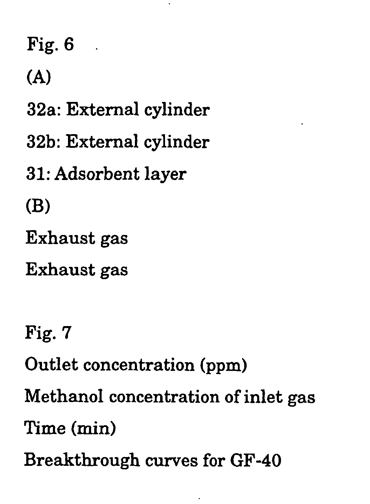

Figs. 5 and 6 provide views of the adsorption column in a further example of the apparatus of the present invention. Fig. 5 is a longitudinal cross-sectional view of such adsorption column, while Fig. 6 provides drawings explicating the adsorption column in Fig. 5. Fig. 6(A) is a cross-sectional view on the line A - A in Fig. 5 and Fig. 6(B) is an enlarged view showing a part of Fig. 5 in greater detail.

Fig. 3 shows an adsorption column 10 representing one example of the apparatus of the present invention. The adsorption column 10 is constructed in such manner that three separate adsorbent layers 11a, 11b and 11c are placed independently on three levels, and exhaust gas conduit tubes 12a, 12b and 12c are placed in the respective spaces below the adsorbent layers 11a, 11b and 11c, and the exhaust gas conduit tubes 12a, 12b and 12c are connected to a vacuum pump 13. In one preferred embodiment of the present invention, MPC is placed as adsorbent layer 11a (as upper most adsorbent layer), synthetic zeolite ("Zeolum") as adsorbent layer 11b, and hydrophobic silica gel as adsorbent layer 11c. In Fig. 3, items 14a, 14b and 14c are conduit tubes for air (purge gas), while item1 is the exhaust gas feed line, item 8 is the air (purge gas) feed line, item 8-1 is the purge exhaust gas line, and item 9 is the gas line for release of the exhaust gas into the atmosphere".

Fig. 4(A) shows an adsorption column 20 representing another example of the apparatus of the present invention. The adsorption column 20 comprises an adsorbent layer 21 filled with MPC. Fig. 4(B) illustrates that rings 24 having a plurality of pores 25 are embedded in the adsorbent layer 21. Each of the rings 24 is connected to the vacuum pump 23 via exhaust gas conduit tubes 22a, 22b and 22c. (Although the figure merely shows a single vacuum pump 23, a plurality of pumps serving each of the exhaust gas conduit tubes 22a, 22b and 22c may alternatively be provided.) In Fig. 4(A), item 1 is the exhaust gas feed line, item 8 is the air (purge gas) feed line, item 8-1 is the purge exhaust gas line, and item 9 is the "gas line for release of exhaust gas into the atmosphere".

Figs. 5, 6(A) and.6(B) show an adsorption column 30 representing a further example of the apparatus of the present invention. The adsorbent layers 31 inside the adsorption column 30 consist of spaces enclosed by a plurality of gas-permeable cylinders 32 (gas-permeable external cylinders 32a and 32b), such spaces being filled with adsorbent. The exhaust gas passes through the inside of the adsorbent layers 31 in the manner represented by the arrow lines in Fig. 6(B). The apparatus is thus configured so as to increase the area of the adsorbent through which the exhaust gas passes.

The foregoing description primarily indicates the embodiments of the present invention relating to a method of treating exhaust gas containing volatile hydrocarbons so as to yield a clean gas for release into the atmosphere. Below are described, with reference to Fig. 2, embodiments of the present invention that relate to a treatment for recovering inert gas as a clean gas in cases where the exhaust gas containing volatile hydrocarbons is an inert gas containing gaseous impurities and/or gaseous contaminants.

Fig. 2 is a schematic flow diagram of a nitrogen gas recovery system constituting an embodiment of the present invention. This flow diagram represents the operation of a large-scale commercial plant that employs the present invention to extract contaminated nitrogen, which is continuously released from a reaction tank where chemical reactions take place in the presence of nitrogen gas (inert gas), to the outside of the system, and subsequently re-circulates it.

The contaminated nitrogen released from the reaction tank 51 is extracted via a C-1 line (for nitrogen gas containing gaseous impurities) to a cooler 52, where it is cooled prior to being compressed in a circulation compressor 53.

The compressed contaminated nitrogen then passes, via a moisture separator 54, to another cooler 55, where it is cooled so that most of the saturated moisture it contains condenses and is thus eliminated. The moisture condensed contaminated nitrogen, under high pressure, now passes through a filter 56 (of filter cloth), which filters out the dust and mist that it contains. Then it is introduced to an adsorption column 57A (57B).

The adsorption column 57A (57B) is the adsorption column 10 or adsorption column 20 shown in the above-mentioned Figs. 3 and 4. The adsorbent employed is either pre-coated MPC alone, or such MPC in combination with similarly pre-coated synthetic zeolite and/or hydrophobic silica gel.

There are two adsorption columns, which are alternately operated, solenoid valves being employed to switch them on alternately from adsorption to desorption and vice-versa. Such alternate switching is implemented at an interval of 1 to 30 minutes. At the moment when adsorption in column 57A is completed, the solenoid valve of the said column's inlet gas tubing automatically turns "OFF", and the process of adsorption in column 57B is made to proceed.

The nitrogen with a high-level of purity that is discharged from the adsorption column 57A (57B) during the adsorption operation undergoes final purification by another filter 58 (of activated carbon), then is returned via a C-2 line (for nitrogen gas of high level of purity) to the reaction tank 51, where it is recirculated.

After the switch to desorption occurs, a solenoid valve (not shown) in the tubing (not shown), connected to the vacuum pump 59, is turned "ON", the vacuum pump 59 is run, and purge air is drawn into the adsorption column 57A through a D-1 purge air line. The purge exhaust gas that is discharged from the vacuum pump 59 is introduced into a condenser 60 through a D-2 purge exhaust line.

The condenser 60 cools the gas with water, then a separator 61 separates the gas from the liquid. The resulting liquid containing impurities and contaminants is pumped by another pump 62 to the outside of the system through a D-4 recovered liquid line, while the uncondensed gas passes through a D-3 uncondensed gas line for disposal (processing) as waste gas. Such uncondensed gas may be returned to the inlet of the adsorption column 57A (57B) as a treatment means thereof in accordance with the publicly known method.

As has been set forth in detail above, the embodiment of the present invention uses adsorption and desorption operations as means for the re-utilization of inert gas, and employs either pre-coated MPC alone, or such MPC in combination with pre-coated synthetic zeolite and/or hydrophobic silica gel as adsorbent. Thus, it is not particularly intended for the purpose of recovering gaseous impurities. Accordingly, in order to achieve a high level of purity of nitrogen, the present invention relies upon the increased rate of diffusion within the pores of each adsorbent, instead of the purged air. Relying on the purged air for such purpose entails the use of large volumes of purged air, which imposes a heavy pumping load and therefore necessitates a large-capacity pump. On the other hand, reliance upon the increased rate of diffusion within the pores of each absorbent ultimately provides a new economical inert gas isolation method permitting attainment of the desired purpose with a vacuum pump of the smallest possible capacity, and an apparatus for implementing the said method.

### EXAMPLES OF EMBODIMENTS

The present invention will be described specifically with reference to examples of the embodiment. It should be appreciated however that the scope of the present invention is by no means limited to these three embodiments.

### Embodiment 1: System for release of clean gas into the atmosphere

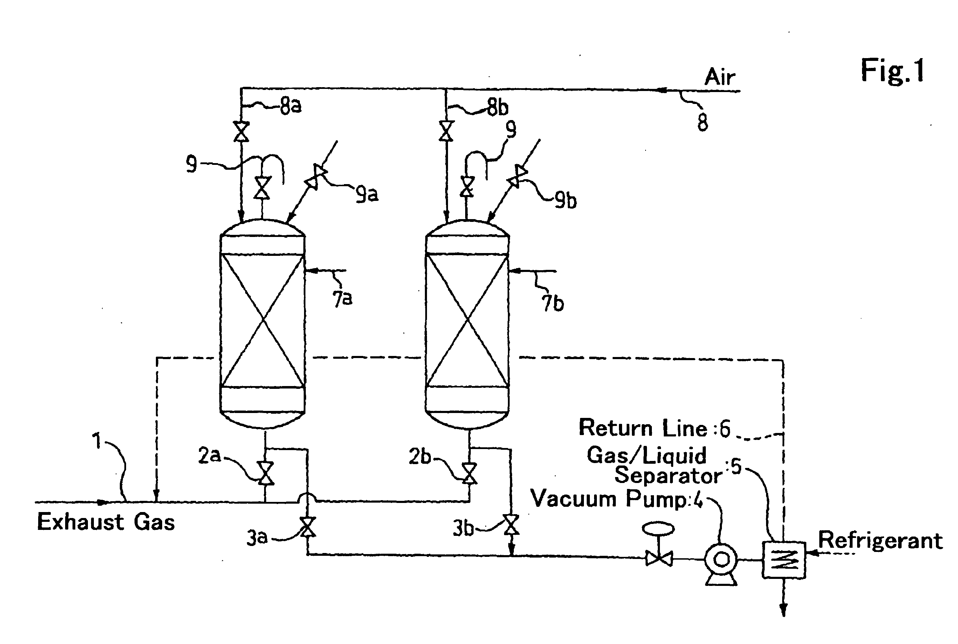

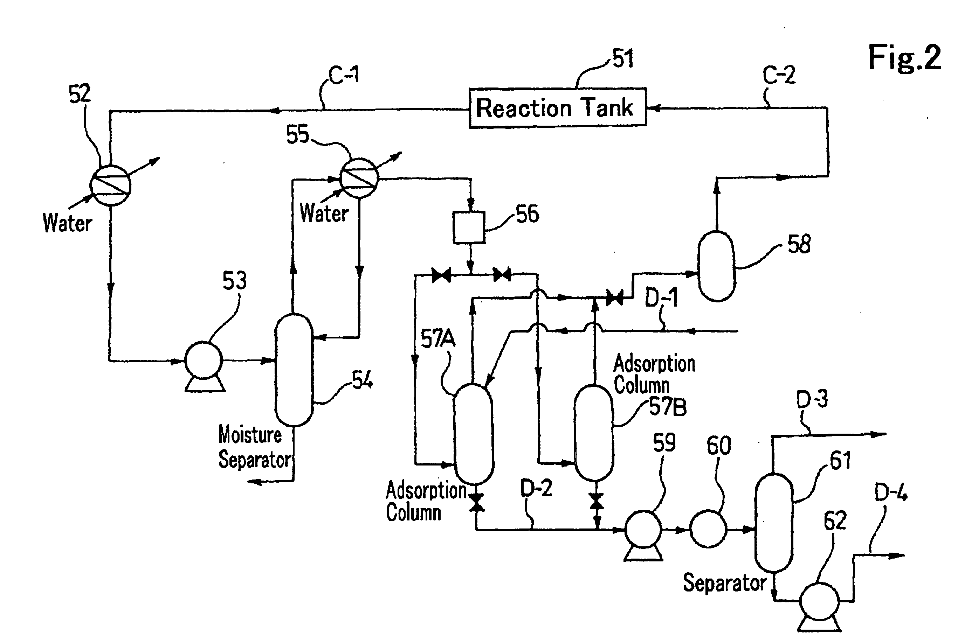

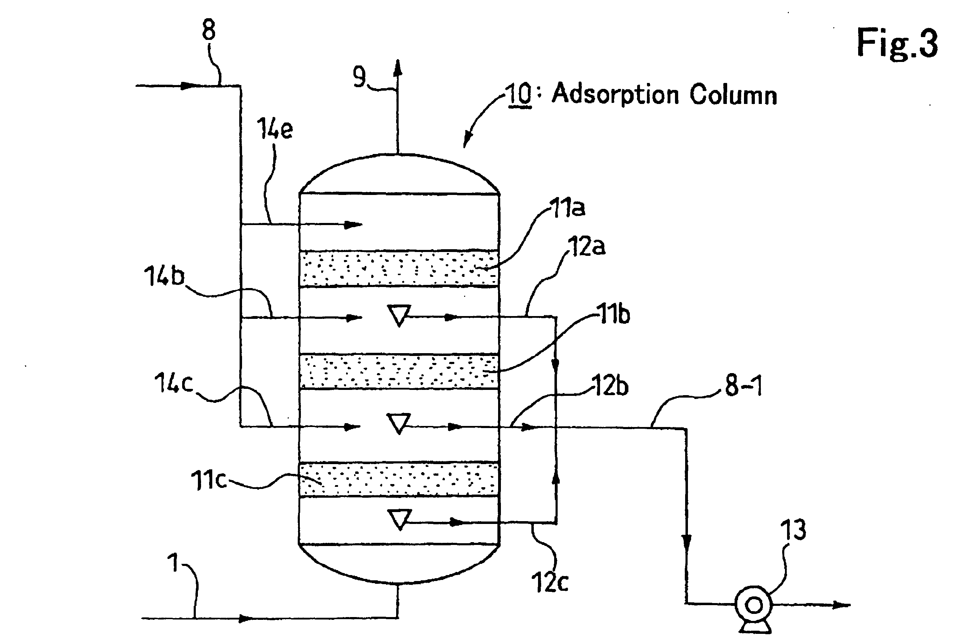

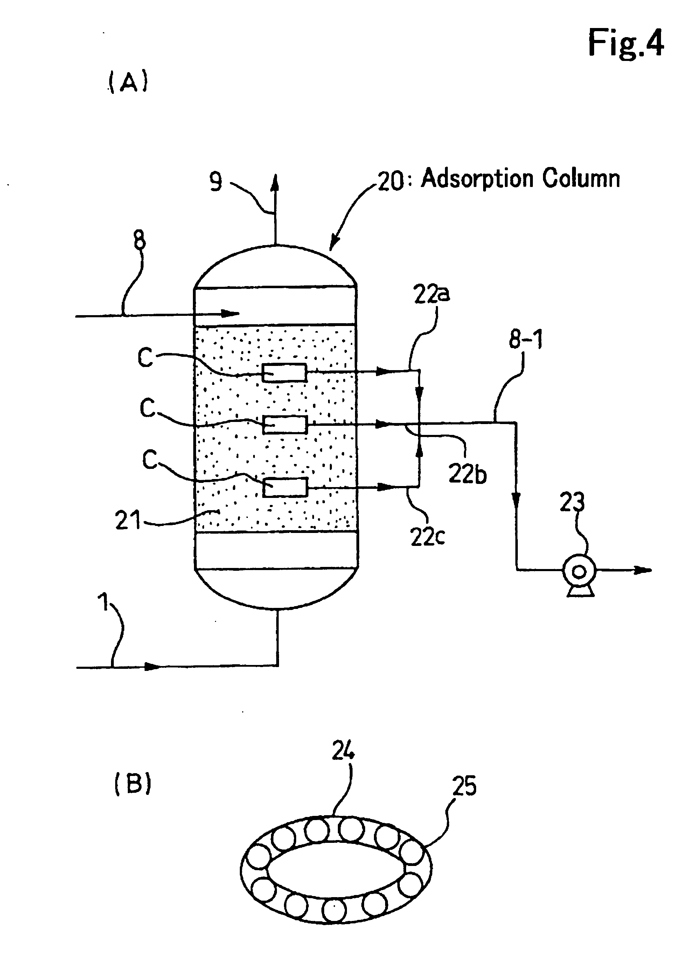

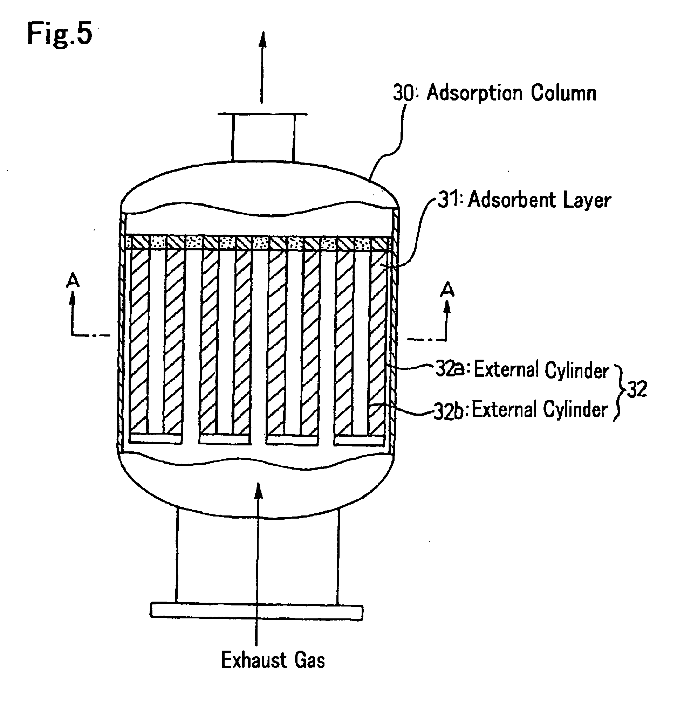

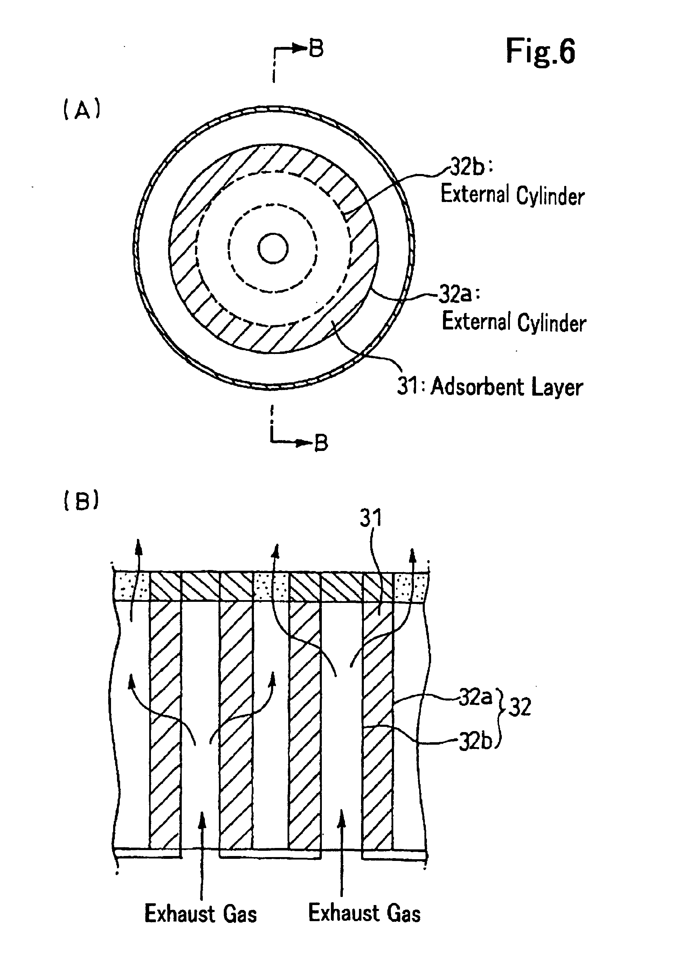

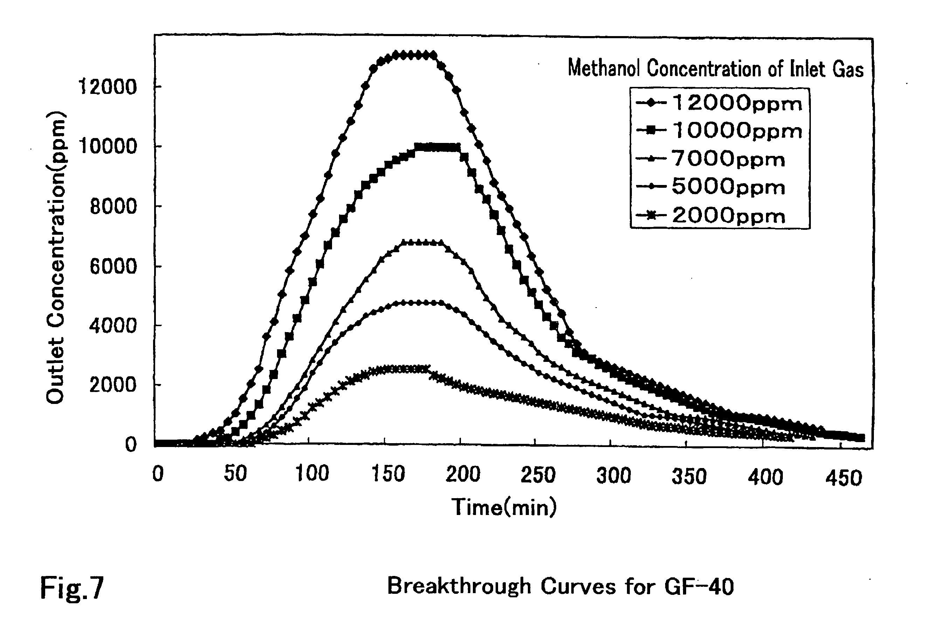

The embodiment 1 is a method for treating volatile hydrocarbons contained in exhaust gas by employing a laboratory-scale apparatus composed of adsorption (desorption) columns 7a and 7b filled with adsorbent, a vacuum pump 4, purge air lines 8, 8a and 8b, an exhaust gas feed line 1, an uncondensed gas return line 6, and certain other items, as shown in Fig. 1. Figs. 1, 2a, 2b, 3a, 3b, 9, 9a and 9b all represent solenoid valves, while Fig. 5 illustrates a gas/liquid separator.

The mesopore activated carbon (MPC), with which the adsorption columns are filled in the embodiment 1, is a product named "GF-40" made by Norit Company. The pores of this activated carbon are primarily mesopores with a diameter of 20 to 30 angstrom. The diameter of the adsorbent's granules is approximately 3 mm. Each column is filled with a volume of approximately 1 kg of adsorbent.

The embodiment 1 is hereafter described in detail with reference to Fig. 1. For the embodiment 1, air at 50% relative humidity (RH) containing 5,000 ppm of methanol is supplied to the adsorption column 7a through the exhaust gas feed line 1 at the rate of 20 L per minute.

Prior to the operation of the adsorption column 7a, the adsorbent's breakthrough curves are determined as a means for pre-coating. Fig. 7 is representative of a graph showing the breakthrough curves for the GF-40 mesopore activated carbon. The graph represents the case where an adsorption column with a diameter of 1.3 cm and length of 18 cm is filled with 6.6 g of GF-40, and made to adsorb methanol at the rate of 2 L per minute, and desorption following the end of adsorption (when the concentration peak is reached) is performed by air purge alone without any vacuum desorption.

As may be noted from Fig. 7, the pre-coating time with 5,000 ppm methanol is approximately 200 minutes (3.3 hours). The same pre-coating operation is also performed on the adsorption column 7b. After confirming that both adsorption columns 7a and 7b have been completely pre-coated, the above-mentioned exhaust gas is then fed into the system and the adsorption/desorption operation begins.

Switching time between adsorption and desorption has been verified to be five minutes, and immediately after the start of operation, the concentration of volatile hydrocarbons in the gas at the outlet of the adsorption column 7a is 4,000 to 5,000 ppm, but such concentration gradually decreases and reaches 100 ppm in two to three hours. Another verified result is that the heat generated in the pre-coating produces an adsorbent temperature of around 60°C, which poses no problem for practical use.

The vacuum pump 4 used for desorption is a rocking dry pump (made by Hori Engineering Co., Ltd.), generating a vacuum of 15 to 25 mmHg (3.3 Kpa), and thereafter a purge gas (air) is employed for suctioning by the pump. Expressed with purge coefficient α, the volume of the purge gas (air) is 1.0.

The purge exhaust gas discharged from the vacuum pump 4 is cooled in the gas/liquid separator 5 to between 0 and 5°C or so by a refrigerant (freon gas). The uncondensed methanol gas resulting from that process is returned, through the return line 6, into the exhaust gas, which is about to enter the adsorption column's inlet. Solenoid valves 2a and 2b are provided for the switching operation between the two adsorption columns 7a and 7b at five-minute intervals, while gas line 9 is provided for releasing the clean exhaust gas, alternately from column 7a and column 7b, into the atmosphere through the solenoid valves 9a and 9b.

The operations carried out in the embodiment 1 described above yielded the following experimental results:

| |
|---|
| Feed gas: 20 L/minute |
| Gas composition at adsorption column inlet: |
| Methanol concentration in the exhaust gas - 5000 ppm |
| Moisture - 50% RH |
| Gas composition at adsorption column outlet: |
| Methanol concentration in the released gas - 20 ppm |
| Moisture - 45% RH |

As shown in the above experimental results, MPC adsorbs practically none of the moisture in the exhaust gas, letting it pass through so that it is released into the atmosphere with the released gas.

This is important because in large commercial-scale plants that process enormous quantities of exhaust gas, the adsorption of even 2% or so of the moisture is a major issue, considering that such an amount of adsorbed moisture expands to several dozen times of its original volume under the high vacuum condition that is applied for desorption, thereby necessitating a vacuum pump with large capacity, far exceeding economically permissible limits. However, because adsorption of the moisture in the exhaust gas does not take place when MPC is employed, this embodiment of the present invention clearly provides a practical solution.

### Embodiment 2: System for recovery of high-purity nitrogen from contaminated nitrogen

The second embodiment aims to recover nitrogen with a high level of purity from the contaminated nitrogen that results from the process of bubbling or aerating with nitrogen to improve the purity of products, as obtained from reaction tanks in petrochemical plants. The second embodiment is particularly applicable to cases where the gas to be treated is nitrogen contaminated with large amounts of low boiling point hydrocarbons such as propane and propylene.

The composition of the gas (contaminated nitrogen) is as follows:

| | |
|---|---|
| N₂ (nitrogen) | 88% |
| C₃ (propane) | 2% |
| C₃ (propylene) | 5% |
| C₄ (butane) | 1% |
| C₅ (pentane) | 1% |
| C₆ or more (hexane, etc.) | 3% |

The adsorbents employed in the second embodiment are MPC (manufactured and sold by Norit Company in pellet form under the product name "GF40-45") and B-type hydrophobic silica gel (manufactured and sold by Fuji Silysia Chemical Ltd. in 10 to 20 mesh pellet form under the product name "CARiACT Q-6") in 10 to 20 mesh pellet form, made by the Fuji Silysia Chemical Ltd.).

The adsorption columns are of the kind shown in Fig. 3, deploying separate, independent adsorbent layers placed one above the other inside the adsorption columns, the top layer being packed with 3 kg of MPC and the bottom layer being packed with 10 kg of the B-type hydrophobic silica gel.

First of all, both adsorbent layers are pre-coated (pre-adsorbed with hexane). After confirming that pre-coating has been completed, the above-described gas (contaminated nitrogen) is fed into the bottom of one of the adsorption columns at the rate of 50 L per minute. The column is then switched to desorption operation after five minutes. In other words, the adsorption/desorption switching time is set at five minute-intervals. For desorption, the suction pressure is set at 20 Torr and the purge gas (air) flow at 2 L/minute. Converted into a purge coefficient, these conditions give a value of 1.5.

Operation of the apparatus under the above conditions yields recovered nitrogen with a purity of 99.9% or higher.

### Embodiment 3: System for co-adsorption of methanol and methylene chloride

The third embodiment employs an adsorption-desorption apparatus with an adsorption column having a height of 27 cm and a diameter of 8.5 cm, and whose interior is filled with adsorbent to a height of 10 cm.

The adsorbents used are named "GF-45" (MPC), made by the Norit Company, and "CARiACT Q-6" (hydrophobic silica gel), made by the Fuji Silysia Chemical Ltd. Both adsorbents are pre-coated with a mixture of methanol and methylene chloride gases and are then packed into the adsorption-desorption apparatus in multiple layers. The "CARiACT Q6" is used for the bottom layer and the "GF-45" is stacked on it.

The experimental conditions are as follows.

The gas treated is a mixture of air and hydrocarbons, in which the concentration of methanol is 6.1% by volume and that of methylene chloride is 18% by volume. The gas, at 50% relative humidity, is treated under the following conditions.

| | |
|---|---|
| Inlet gas flow = | 1 L/minute |
| Degree of vacuum = | 15 to 25 Torr |
| Purge gas flow = | 0.03 L/minute |

The above results indicate a methanol concentration of 5 ppm and a methylene chloride concentration of 0 ppm in the outlet gas. These results confirm that the use of MPC makes it possible to achieve practically zero emissions.

### Comparison example for Embodiment 3

For comparative purposes, the inventors conducted an experiment using the adsorption/desorption apparatus of the third embodiment, but with different adsorbents. Specifically, the Fuji Silysia Chemical Ltd.'s "CARiACT Q-6" (hydrophobic silica gel) product, pre-coated in the same manner as explained in the third embodiment, was used as the bottom adsorbent layer, while the product named "Y-type Zeolite 390HUD" made by Tosoh Corporation, also pre-coated in the same manner, constituted the top layer formed above the bottom adsorbent layer. The same experimental conditions for the third embodiment were used.

The results yielded a methanol concentration of 200 ppm and a methylene chloride concentration of 100 ppm in the adsorption column outlet gas. Thus the comparison example, which represents the conventional multiple-layer adsorbent method, demonstrates that when MPC is not employed, it is extremely difficult to reduce the concentration of hydrocarbons in the outlet gas to below the 100 ppm level.

## Claims

1. A treatment method for exhaust gas containing volatile hydrocarbons, comprising:
the employment of adsorption apparatuses that have adsorbent layers and can execute the processes of adsorption and desorption alternately,
the passing of the exhaust gas containing volatile hydrocarbons through one of two adsorption apparatuses to adsorb the volatile hydrocarbons into the adsorbent layers within the adsorption apparatus, and the extraction of exhaust gas, substantially free of volatile hydrocarbons, through the column's outlet; and during this time,
switching to the other adsorption apparatus to continue the desorption operation so as to extract freshly-adsorbed volatile hydrocarbons for release to the outside of the system,
wherein the adsorbent layers are either a single layer of mesopore activated carbon pre-coated with volatile hydrocarbons, or a multiple-layer combination of the mesopore activated carbon and similarly pre-coated hydrophobic silica gel and/or synthetic zeolite, and the adsorption apparatus uses a vacuum pump in combination with a purge gas for desorption, and the adsorption/desorption switching time being set to 1 to 30 minutes, and the resulting purge exhaust gas is extracted for release to the outside of the system.

2. The treatment method for exhaust gas containing volatile hydrocarbons according to claim 1, wherein the exhaust gas containing volatile hydrocarbons is multi-constituent hydrocarbon gas containing a useful constituent that is targeted for recovery.

3. The treatment method for exhaust gas containing volatile hydrocarbons according to claim 1, wherein the exhaust gas containing volatile hydrocarbons is an inert gas containing gaseous impurities and/or gaseous contaminants.

4. The treatment method for exhaust gas containing volatile hydrocarbons according to any of claims 1 to 3, wherein the purge exhaust gas undergoes a cooling treatment and the uncondensed gas after the cooling treatment is returned to an inlet of the adsorption apparatus.

5. The treatment method for exhaust gas containing volatile hydrocarbons according to any of claims 1 to 4, wherein the exhaust gas containing volatile hydrocarbons, which is fed into the adsorption apparatus, is pressurized, or pre-cooled, before undergoing adsorption treatment.

6. An apparatus for implementing the treatment method for exhaust gas containing volatile hydrocarbons according to any of claims 1 to 5, wherein the adsorption apparatus is structured in such manner that adsorbent layers inside the apparatus are separated into multiple independent layers of solid adsorbent, each with varying adsorption characteristics, and the multiple independent adsorbent layers are placed one above the other.

7. The apparatus for implementing the method for isolating an inert gas according to claim 6, wherein each of the exhaust gas conduit tubes is embedded in each of spaces between the multiple independent adsorbent layers inside the adsorption apparatus, and the conduit tube is connected to a vacuum pump.

8. An apparatus for implementing a treatment method for exhaust gas containing volatile hydrocarbons according to any of claims 1 to 5, wherein the adsorbent layers of the adsorption apparatus are structured in such manner as to be packed in spaces enclosed by a plurality of gas-permeable cylinders.
